# EUROPEAN PATENT APPLICATION

(11) **EP 4 730 269 A1**
(43) Date of publication of application: **22.04.2026**
(21) Application number: 24823431.2
(22) Date of filing: 12.06.2024
(51) Int. Cl.: G06V 10/74, G06T 7/00

(54) **IMAGE PROCESSING DEVICE, IMAGE PROCESSING METHOD, AND OPERATION DEVICE CONTROLLER**

(30) Priority: 13.06.2023 JP 2023097071
(71) Applicant: Kyocera Corporation, Kyoto-shi, Kyoto 612-8501 (JP); Umemura Educational Institutions, Nagoya-shi, Aichi 466-0825 (JP)
(72) Inventor: ONISHI, Shosuke, Kyoto-shi, Kyoto 612-8501 (JP); HASHIMOTO, Manabu, Nagoya-shi, Aichi 466-0825 (JP)
(74) Representative: TBK
(86) International application number: PCT/JP2024/021405
(87) International publication number: WO 2024/257816

(57) **Abstract**

An image processing device includes a communication unit and a controller. The communication unit acquires a first image. The controller performs a similarity determination between a second image and at least a portion of the first image. The second image is generated based on a training image group. The training image group includes multiple detection target images different from the first image. The controller is capable of regenerating the second image. The controller regenerates the second image based on a training image group including more unused images than used images used to generate the second image.

## Description

### CROSS-REFERENCE TO RELATED APPLICATIONS

This application claims priority of Japanese Patent Application No. 2023-097071, filed in Japan on June 13, 2023, the entire disclosure of which is incorporated herein by reference.

### TECHNICAL FIELD

The present disclosure relates to an image processing device, an image processing method, and a manipulation device controller.

### BACKGROUND OF INVENTION

In the related art, a known object recognition method uses template matching (see Patent Literature 1).

### CITATION LIST

### PATENT LITERATURE

Patent Literature 1: Japanese Unexamined Patent Application Publication No. 2018-151748

### SUMMARY

In a First Aspect, an image processing device includes an acquisition unit and a controller.

The acquisition unit is configured to acquire a first image.

The controller is configured to perform a similarity determination between at least a portion of the first image and a second image generated based on a training image group including multiple detection target images different from the first image.

The controller is capable of regenerating the second image and regenerates the second image based on a training image group that includes more unused images than used images used to generate the second image.

In a Second Aspect, an image processing method includes
acquiring a first image,
performing a similarity determination between at least a portion of the first image and a second image generated based on a training image group including multiple detection target images different from the first image, and
regenerating the second image based on a training image group including more unused images than used images used to generate the second image.

### BRIEF DESCRIPTION OF THE DRAWINGS

FIG. 1 is a diagram illustrating an example of the configuration of an object manipulation system including an image processing device according to an embodiment.
FIG. 2 is a diagram for explaining similarity determination between a representative image and a partial region of an entire image, which is performed by a controller in FIG. 1 in order to detect the location of a detection target in the entire image.
FIG. 3 is a diagram for explaining a method of creating a statistical model for determining a pixel value for each pixel of a representative image.
FIG. 4 is a diagram for explaining another method of creating a statistical model for determining a pixel value for each pixel of a representative image.
FIG. 5 is a diagram for explaining yet another method of creating a statistical model for determining a pixel value for each pixel of a representative image.
FIG. 6 illustrates a statistical model of each pixel used to create a representative image in order to determine matching pixels to be excluded from calculation of similarity.
FIG. 7 is a flowchart for explaining a location detection process executed by the controller in FIG. 1.
FIG. 8 is a flowchart for explaining a representative image updating subroutine executed by the controller in FIG. 1.

### DESCRIPTION OF EMBODIMENTS

Hereinafter, an embodiment of an image processing device to which the present disclosure is applied will be described with reference to the drawings.

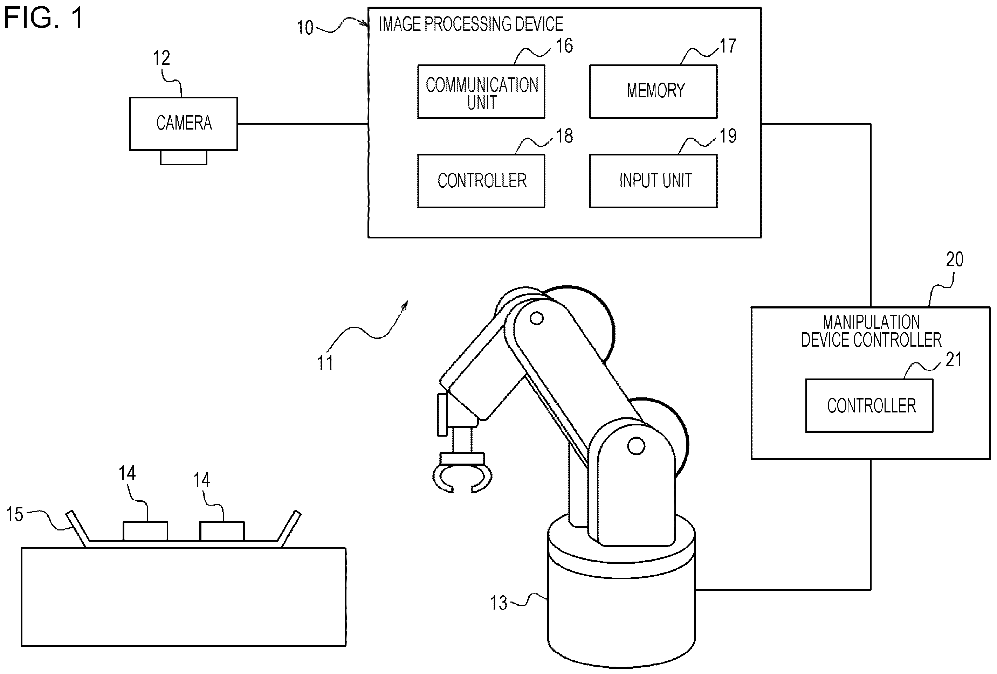

FIG. 1 illustrates an example of the configuration of an object manipulation system 11 including an image processing device 10 according to an embodiment. The object manipulation system 11 may include a camera 12, the image processing device 10, a manipulation device 13, and a manipulation device controller 20.

The object manipulation system 11 performs a specific operation on a detection target 14, such as a manufactured product, in a factory, for example. The detection target 14 is placed on a tray 15, for example. The camera 12 may capture an image of the tray 15 on which the detection target 14 has been placed. The camera 12 may generate images periodically, for example, at a predetermined frame rate such as 30 fps. The image processing device 10 may detect the position of the detection target 14 using an image captured by the camera 12. The manipulation device 13 may perform a predetermined task on the detection target 14 at the position detected by the image processing device 10. The manipulation device 13 may be, for example, a robot, and may grasp multiple detection targets 14 as a task. The manipulation device controller 20 includes a controller (second controller) 21. The controller 21 acquires a similarity determination, which will be described later, carried out in the image processing device 10. The controller 21 is capable of controlling the manipulation device 13 based on the similarity determination. When the manipulation device 13 is a robot, the manipulation device controller 20 is, for example, a robot controller.

The image processing device 10 includes a communication unit (acquisition unit) 16 and a controller 18. The image processing device 10 may further include a memory 17 and an input unit 19.

The communication unit 16 acquires a first image from the camera 12. The first image is also referred to as an entire image. The entire image is an image in which the location of the detection target 14 is detected by the image processing device 10. Specifically, the entire image is an image in which a subject that is a matching target appears. A background also appears in the entire image. The matching target is a target that is to be matched with the detection target 14 in the second image, as described below. The second image is also referred to as a template image or a representative image. Note that, for example, when the camera 12 captures a specific location, the matching target may not appear in the entire image. However, the matching target does not need to appear in the entire image. In this case, the image processing device 10 determines that the detection target 14 is not located in the entire image. In other words, the image processing device 10 can determine whether or not the detection target 14 appears in the entire image. The communication unit 16 may be, for example, a communication interface that communicates information and commands to and from an external device. The communication unit 16 may supply the manipulation device 13 with the location of the detection target 14 in the entire image.

The memory 17 includes any storage device, such as a RAM (random access memory) and a ROM (read only memory). The memory 17 may store various programs for allowing the controller 18 to function and various information used by the controller 18.

The memory 17 stores a template generation image group. The template generation image group includes multiple detection target images. The template generation image group may include all the detection target images stored in the memory 17. In this case, the template generation image group is also referred to as an entire image group. Detection target images stored in the memory 17 may be deleted or added as appropriate. The number of detection target images in the entire image group may increase or decrease with the deletion or addition of detection target images. Unlike the first image, the detection target image are images of the detection targets 14. The multiple detection target images may be acquired in chronological order, as described below. The multiple detection target images may include, for example, at least one detection target source image acquired from the camera 12 and at least one detection target augmented image generated from the detection target source image using an augmentation process. The multiple detection target images may also include, for example, multiple detection target images acquired in different environments. This embodiment will be described using an example of a template generation image group including multiple detection target images acquired in chronological order.

The multiple detection target images may also include multiple processed images obtained by performing image processing on some of the multiple detection target images. The image processing may be performed by the controller 18. The image processing is, for example, brightness adjustment processing applied to each of some of a plurality of detection target images, the process being performed based on changes in pixel values between a plurality of detection target images within the template generation image group whose acquisition timings are before and after the detection target images, across the entirety of each detection target image. Alternatively, the image processing may be, for example, processing in which a disturbance that has suddenly occurred is added to multiple detection target images acquired before and after a number of detection target images.

The template generation image group may include a training image group. The training image group includes multiple detection target images that constitute a portion of all of the detection target images included in the template generation image group. As will be described later, the detection target images included in the training image group are used to generate or regenerate a representative image. When generating or regenerating a representative image, the training image group may be selected and extracted as training images from the template generation image group each time.

The input unit 19 includes at least one interface that detects user operation input. The input unit 19 may include, for example, physical keys, capacitive keys, and a touch screen integrated with a display device.

The controller 18 includes one or more processors and memories. The processor may include a general-purpose processor that loads a specific program to execute a specific function, and a dedicated processor specialized for specific processing. The dedicated processor may include an ASIC (application specific integrated circuit). The processor may include a PLD (programmable logic device). The PLD may include a FPGA (field-programmable gate array). The controller 18 may be either a SoC (system-on-a-chip) or a SiP (system-in-a-package) in which one or more processors work together.

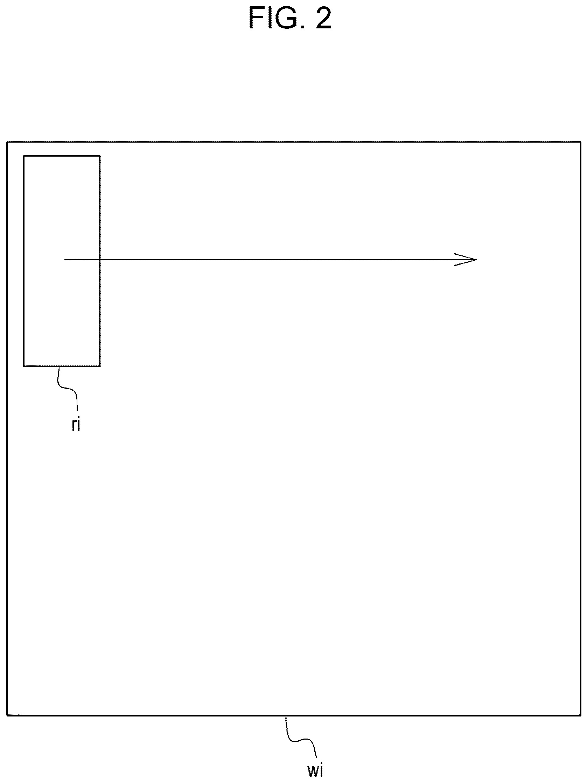

As illustrated in FIG. 2, the controller 18 performs a similarity determination between a second image ri, which will be described later, and at least a partial region of a first image wi, with the second image ri superimposed on the partial region of the first image wi. By performing the similarity determination, the controller 18 may determine whether a matching target in the first image wi is the detection target 14, or whether the detection target 14 appears in the first image wi. Note that in this embodiment, an example will be described in which a second image (representative image) ri, which is smaller than the first image (entire image) wi, is superimposed on a partial region of the first image (entire image) wi. The similarity determination will be described later using a detailed example.

Furthermore, the controller 18 may detect the location of the detection target 14 in addition to determining whether the matching target is the detection target 14. Specifically, the controller 18 may detect the location of the detection target 14 in the entire image wi by displacing the representative image ri relative to the entire image wi, thereby displacing an overlapping region that is a part of the entire image wi that overlaps the representative image ri, and performing a similarity determination at each position.

When the controller 18 determines that the overlapping region is similar to the representative image ri, the controller 18 may acquire the partial region as an unused detection target image. Furthermore, the controller 18 may include the acquired unused detection target image in a training image group. Specifically, the controller 18 stores a partial region within the entire image wi that is determined to be similar to the representative image ri in the memory 17 so that the partial region is included in the training image group as an unused detection target image, which will be described later. Note that an unused detection target image may also be referred to as an unused image, and in particular, an unused image that has not been used to generate or regenerate the representative image ri is also referred to as a first unused image.

The controller 18 regenerates the representative image ri based on the training image group. The representative image ri has a size equal to or smaller than that of the entire image wi. The controller 18 performs regeneration by replacing the representative image ri stored in the working memory of the controller 18 or the memory 17 with an image newly created based on the training image group. Note that regeneration of the representative image ri is also referred to as updating the representative image ri.

When a representative image ri is not stored in the work memory or the memory 17, the controller 18 may store a newly generated image based on the training image group as an initial representative image ri. Before the representative image ri is stored, in other words, before the initial representative image ri is generated, the training image group may include multiple images that were actually captured of the detection targets 14 in advance as initial detection target images.

The number of detection target images to be included in the training image group may be freely chosen. For example, the number of detection target images to be included in the training image group may be the same as, greater than, or smaller than a first number, which will be described later.

The controller 18 is capable of regenerating the representative image ri. The controller 18 may be capable of regenerating the representative image ri two or more times. The controller 18 may regenerate the representative image ri when the number of unused images included in the training image group reaches a first number. The first number may be determined in accordance with the size, generation method, and so forth of the representative image ri. For example, in a configuration in which the representative image ri is created based on statistical values of pixel values of multiple detection target images as described below, the first number may be determined as the lowest value at which a significant statistical value can be calculated. Note that the timing at which regeneration of the representative image ri is performed may be freely chosen. For example, the controller 18 may regenerate the representative image ri at predetermined elapsed time intervals, or may regenerate the representative image ri when the accuracy of similarity determination drops below a predetermined threshold.

An unused image is a detection target image that has never been used to generate or regenerate the representative image ri. The controller 18 may recognize an unused image as a used detection target image after using the unused image to regenerate the representative image ri. In other words, a used detection target image is a detection target image that was used to regenerate the representative image ri before the last time. Note that a used detection target image is also referred to as a used image, and in particular, a used image that has been used to generate or regenerate the representative image ri is also referred to as a first used image.

The training image group includes a greater number of first unused images than the number of first used images. In other words, the controller 18 uses more first unused images than the first used images to update the representative image ri. The training image group may include multiple unused images that have not been used to update the past representative images ri when updating the new representative image ri. Furthermore, when updating the new representative image ri, the proportion of the multiple unused images in the training image group may be greater than the proportion of used images used to update the past second images in the training image group. The training image group may include the first used images. Alternatively, the training image group may not include the first used images.

Note that even when a first used image is used to regenerate a representative image ri, the training image group does not need to include a first used image that has been used four or more times in the generation and regeneration of the representative image ri. Furthermore, even when a first used image is used to regenerate the representative image ri, the training image set may include more first used images that have been used n-1 times in the generation and regeneration of a representative image ri than first used images that have been used n times in the generation and regeneration of a representative image ri. n is any natural number. Specifically, for example, the training image group may include more first used images that have been used two times in the generation and regeneration of the representative image ri than first used images that have been used three times in the generation and regeneration of the representative image ri.

When including a first unused image in the training image group, the controller 18 may delete the first used image in the training image group used to update the immediately preceding representative image ri from the training image group in chronological order. In other words, the controller 18 may replace the oldest first used image included in the training image group with a new first unused image.

Alternatively, the controller 18 may change the ratio of the number of first unused images to the total number of detection target images in the training image group for each regeneration. In other words, the controller 18 may change the number of detection target images included in the training image group for each regeneration. Specifically, the controller 18 may use a number of unused images in regenerating the second image that is different from the number of unused images used in the previous regeneration. In a configuration in which the ratio is changed, the controller 18 may perform the above-mentioned replacement when the number of detection target images included in the training image group is the number of detection target images to be used when updating the next representative image ri and when a new first unused image is to be included in the training image group.

A different number of detection target images may be included in the training image group when generating the representative image ri and when regenerating the representative image ri. The number of detection target images included in the training image group may be the same as or different from the first number.

The controller 18 may generate the representative image ri with various methods using the training image group. For example, the controller 18 may create a statistical model such as a histogram of pixel values or a Gaussian mixture distribution based on pixel values of pixels at corresponding addresses between detection target images included in the training image group. The controller 18 may determine the pixel value of each pixel based on the statistical model created for each pixel. The controller 18 may generate a representative image ri by determining pixel values at the addresses of multiple pixels.

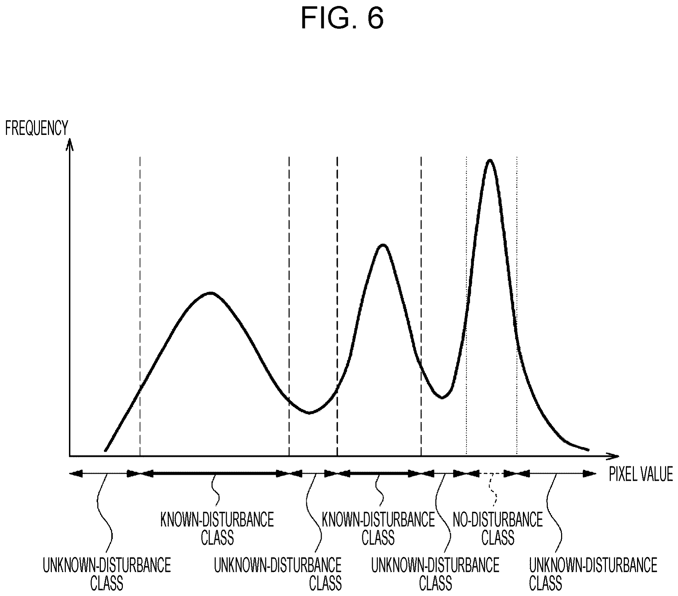

Specifically, the controller 18 may determine the pixel value that is the most frequent value in the statistical model created for each pixel to be the pixel value of that pixel in the representative image ri. Furthermore, the controller 18 may determine ranges for classifying pixel values of the pixels in the statistical models into multiple classes in order to perform disturbance determination for a portion of the entire image wi in the similarity determination described below. The multiple classes may include a no-disturbance class, a known-disturbance class, and an unknown-disturbance class. As illustrated in FIG. 6, the controller 18 may classify a peak including the most frequent value as the no-disturbance class in the statistical model. In a statistical model including multiple peaks, the controller 18 may classify peaks other than the no-disturbance class as the known-disturbance class. The controller 18 may classify a range of pixel values other than those of the no-disturbance class and the known-disturbance class as the unknown-disturbance class. For example, in a configuration in which a statistical model is approximated to a Gaussian mixture model, the ranges of pixel value defining the no-disturbance class and the known-disturbance class may be set to a range of ±6σ centered on the most frequent value of each Gaussian distribution. The ranges of pixel values that define the no-disturbance class and the known-disturbance class can be freely set within a range that satisfies a desired accuracy.

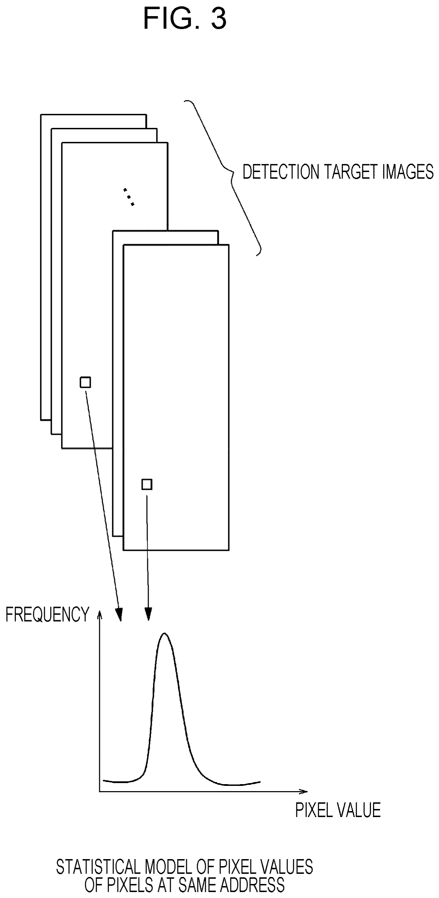

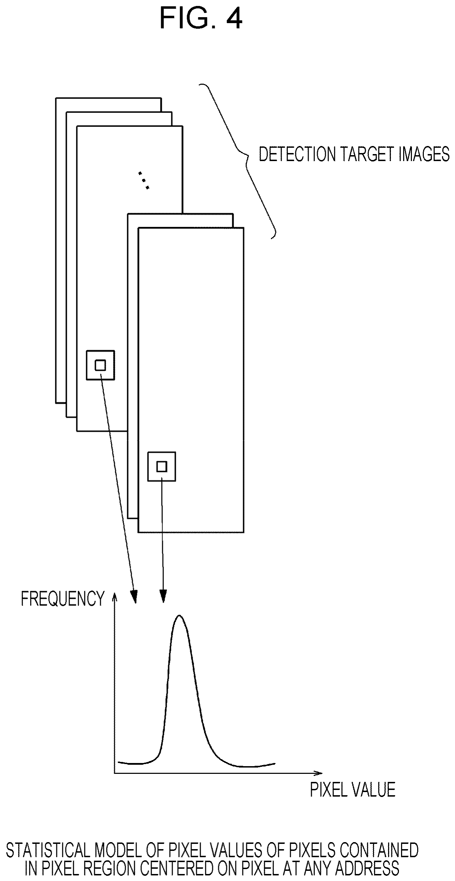

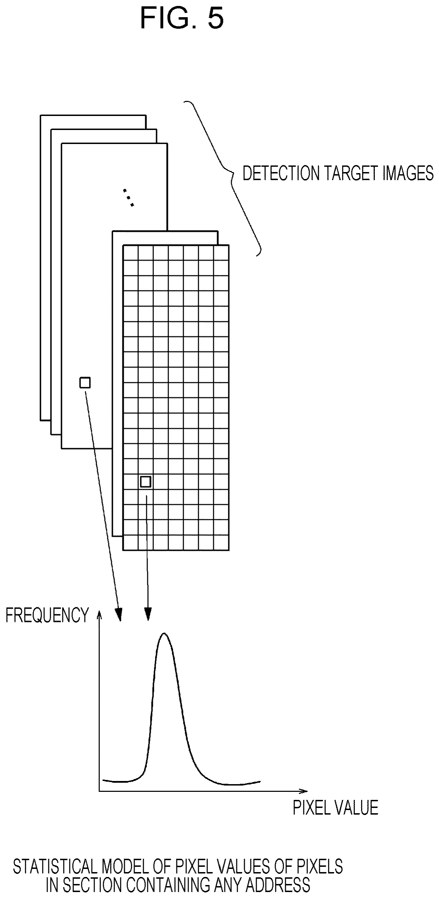

Note that the pixels at corresponding addresses may be only pixels located at the same address between the images, as illustrated in FIG. 3. Alternatively, the pixels at corresponding addresses may be multiple pixels included in, for example, a 3x3 pixel area centered on the same address, as illustrated in FIG. 4. Alternatively, the pixels at corresponding addresses may be multiple pixels in a section including the same addresses among sections obtained by dividing each image into multiple grid squares, as illustrated in FIG. 5. Furthermore, the statistics may take into account multiple detection target images including the above-mentioned multiple processed images.

The controller 18 performs a similarity determination by comparing the generated representative image ri with a partial region of the entire image wi. For example, the controller 18 may perform the similarity determination by comparing the pixel values of at least a portion of all the pixels constituting the representative image ri with the pixel values of pixels in the entire image wi that overlap the representative image ri (pixels at the same addresses) when the generated representative image ri is superimposed on a portion of the entire image wi. The controller 18 may then determine whether or not there is a region in the entire image wi that is similar to the representative image ri by displacing the overlapping region between the representative image ri and the entire image wi and comparing the pixels of the representative image ri with the pixels in the entire image wi that overlap the representative image ri for each displacement. Note that when performing a similarity determination between the entire image wi and the representative image ri, the controller 18 does not need to actually superimpose the entire image wi and the representative image ri, and the controller 18 may instead obtain the positions of the pixels as though the entire image wi and the representative image ri were overlapping through computational processing.

The controller 18 may compare all pixels constituting the generated representative image ri with all pixels in a partial region of the entire image wi.

Alternatively, the controller 18 may select, as matching pixels, pixels to be used for comparison with the entire image wi from among the multiple pixels constituting the generated representative image ri. For example, the controller 18 may determine multiple characteristic pixels in the representative image ri as matching pixels. The controller 18 may select pixels corresponding to characteristic points such as edges and corners as characteristic pixels. Alternatively, the controller 18 may select multiple characteristic pixels based on, for example, a spatial co-occurrence histogram calculated for pixel values of multiple pixels freely selected from the representative image ri. A combination of pixel values with high frequency in the spatial co-occurrence histogram indicates that the combination appears frequently in the representative image ri but is not characteristic. Therefore, the controller 18 may select, as characteristic pixels, multiple pixels corresponding to combinations whose frequency exceeds zero and is equal to or less than a characteristic threshold in the spatial co-occurrence histogram.

The controller 18 may select the matching pixels from all pixels or from multiple characteristic pixels. In the following description, a configuration in which the matching pixels are selected from multiple characteristic pixels will be described as an example. For example, the controller 18 may select multiple stable pixels as matching pixels from multiple characteristic pixels. In other words, the controller 18 may use the stable pixels as matching pixels in comparisons.

The controller 18 may select stable pixels using at least one detection target image in the training image group. Specifically, the controller 18 may extract stable pixels with small variations in pixel values by, for example, comparing the pixel values of pixels at the same addresses in the multiple detection target images with the pixel values of pixels at the same addresses in the representative image ri, and further performing analogical determination. More specifically, the controller 18 may select stable pixels based on an inter-image co-occurrence histogram calculated for the multiple detection target images and the representative image ri. A combination of pixel values with a high frequency in the inter-image co-occurrence histogram indicates that the pixel values are stable over time, in other words, are less susceptible to sudden disturbances. The controller 18 may calculate a stability percentage for each pixel of the representative image ri based on multiple inter-image co-occurrence histograms calculated for the multiple detection target images. The controller 18 may select characteristic pixels whose stability percentage is greater than or equal to a stability threshold as stable pixels.

The number of detection target images used to extract stable pixels may be less than the number of detection target images used to generate or update the representative image ri containing the stable pixels. Stable pixels may be reselected at least once for each similarity determination between the first image and the second image. The period at which stable pixels are reselected may be the same as or different from the period at which the representative image ri is regenerated. Reselecting stable pixels means changing the detection target images used to select stable pixels. When reselecting stable pixels, detection target images that were not used in past selections or reselections of stable pixels may be used. Note that unused detection target images are also referred to as unused images. In particular, unused images that have not been used in the selection or reselection of stable pixels are also referred to as second unused images. Note that second unused images may refer to the same images as the first unused images described above. Detection target images used to select stable pixels may be selected from the updated training image group in order of most recent acquisition time.

The proportion of the second unused images in the training image group for selecting or reselecting stable pixels may be the same as the proportion of the first unused images in the training image group for updating the representative image ri. Alternatively, the proportion of the second unused images in the training image group for selecting or reselecting stable pixels may be different from the proportion of the first unused images in the training image group for updating the representative image ri. More specifically, the proportion of the second unused images in the training image group for selecting or reselecting stable pixels may be lower than the proportion of the first unused images in the training image group for updating the representative image ri. Alternatively, the proportion of the second unused images for selecting or reselecting stable pixels may be higher than the proportion of the first unused images for regenerating the representative image ri.

The controller 18 may extract stable pixels directly from the representative image ri. For example, the controller 18 may calculate the product of a frequency obtained by normalizing spatial co-occurrence histogram calculated as described above and the inverse of a frequency obtained by normalizing inter-image co-occurrence histogram calculated as described above. The controller 18 may extract, as stable pixels, pixel combinations for which the product is less than or equal to a threshold.

The controller 18 may store the addresses of determined groups of matching pixels in the memory 17. A group of matching pixels is a plurality of matching pixels that are newly selected based on the updated training image group for the representative image ri stored in the memory 17. The controller 18 may update the addresses of a group of matching pixels by replacing the addresses of the group of matching pixels stored in the memory 17 with the addresses of the newly determined group of matching pixels. The controller 18 may store the statistical model for the matching pixels in the memory 17 together with the group of addresses of the matching pixels.

In the similarity determination, the controller 18 may calculate the similarity by summing up the differences in pixel values between pixels constituting the generated representative image ri and pixels in the partial region of the entire image wi, which have the same addresses. In a configuration in which matching pixels are selected, the controller 18 may calculate the similarity by focusing on multiple matching pixels in the representative image ri. The controller 18 may determine that a partial region of the entire image wi, where the similarity is less than or equal to a threshold, is an image portion containing an image similar to the detection target 14. The controller 18 may determine the position of that image portion as the location of the detection target 14. Note that when summing up the differences in pixel values, a lower similarity indicates a higher degree of matching. Alternatively, a similarity that increases with a higher degree of matching may be used, such as a configuration in which the similarity is determined by the cosine similarity of pixel values. In such a configuration, a partial region of the entire image wi, where the similarity is greater than or equal to a threshold, may be determined as an image portion containing an image similar to the detection target 14.

The controller 18 may exclude some matching pixels from the calculation of similarity. The excluded pixels may be pixels whose pixel values in a partial region of the entire image wi that have the same addresses as the matching pixels are classified into the known-disturbance class or the unknown-disturbance class in the pixel statistical model, as illustrated in FIG. 6. The controller 18 may perform a similarity determination using the remaining matching pixels after the exclusion.

Alternatively, the controller 18 does not need to perform analogical determination based on similarity if a specific condition is met using a statistical model of pixels created for disturbance determination. In this case, a partial region of the entire image wi may be determined to be dissimilar to the representative image ri. The specific condition is when there are a large number of pixels having pixel values classified into the known-disturbance class and the unknown-disturbance class in the corresponding statistical model or when there are a large number of pixels having pixel values outside a certain range centered on the most frequent pixel value, among all pixels used for comparison in the partial region. A large number of pixels may mean that the number exceeds a predetermined percentage of all the pixels.

"A large number of pixels that satisfy the above condition among all the pixels" may mean that the number of pixels whose pixel values satisfy the above condition is greater than or equal to a threshold. Alternatively, "a large number of pixels that satisfy the above condition among all the pixels" may mean that the ratio of pixels that satisfy the above condition to all the pixels used in the comparison is greater than or equal to a threshold.

As described above, when detecting the location of the detection target 14 in the entire image wi, the controller 18 may include an image portion of a partial region of the entire image wi corresponding to the location as an unused image in the training image group and store the image portion in the memory 17. Furthermore, when the similarity falls within a first range having a limit value on the matching side, the controller 18 may include the image portion as an unused image in the training image group. The limit value on the matching side is an upper limit value in a configuration in which a higher similarity indicates a higher degree of matching, and is a lower limit value in a configuration in which a lower similarity indicates a higher degree of matching.

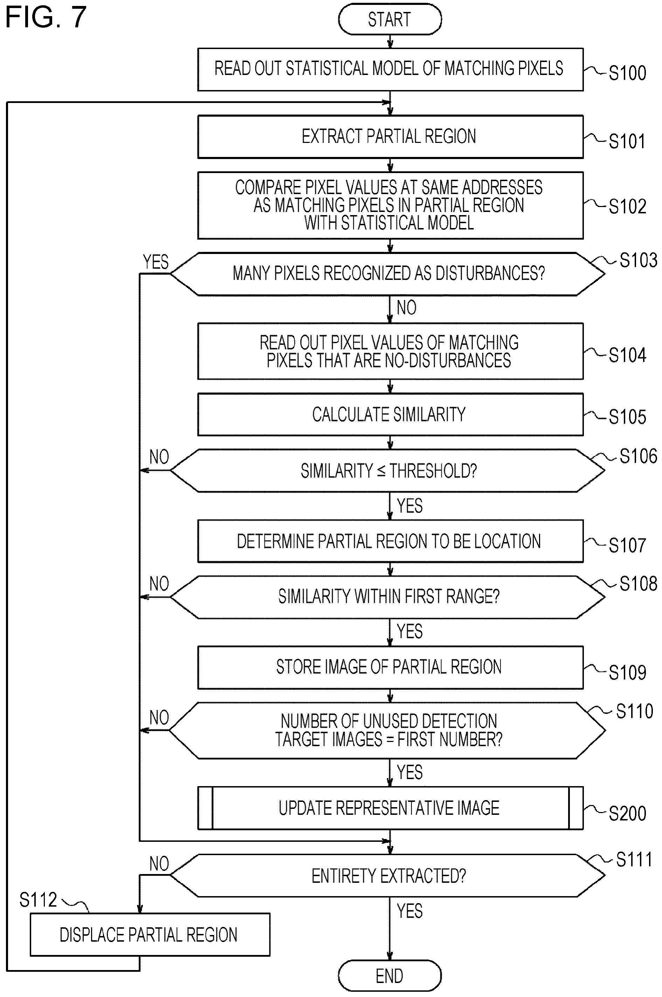

Next, a location detection process executed by the controller 18 in this embodiment will be described with reference to the flowchart in FIG. 7. The location detection process starts by acquiring one frame of the entire image wi.

In Step S100, the controller 18 reads out the statistical model of matching pixels in the representative image ri from the memory 17. After reading out the statistical model, the process proceeds to Step S101.

In Step S101, the controller 18 extracts a partial region of the acquired entire image wi, the partial region having the same size as a detection target image included in the training image group, as a region for similarity determination. After extracting the partial region, the process proceeds to Step S102.

In Step S102, the controller 18 compares the pixel values at the same addresses as the matching pixels in the partial region extracted in the most recent Step S101 with the statistical model of the matching pixels. After the comparison, the process proceeds to Step S103.

In Step S103, the controller 18 determines whether there are many pixels recognized as disturbances in the partial region based on the comparison in the most recent Step S102. If there are not many pixels recognized as disturbances, the process proceeds to Step S104. If there are many pixels recognized as disturbances, the process proceeds to Step S111.

In Step S104, the controller 18 reads out the pixel values of the matching pixels at the same addresses as the pixels determined to be no-disturbances in the comparison in the most recent Step S102 from the memory 17. After reading out the pixel values, the process proceeds to Step S105.

In Step S105, the controller 18 calculates the similarity between the representative image ri and the partial region based on the pixel values of the pixels in the partial region at the same addresses as the matching pixels read out in Step S104. After the calculation, the process proceeds to Step S106.

In Step S106, the controller 18 determines whether the similarity is less than or equal to a threshold. If the similarity is less than or equal to the threshold, the process proceeds to Step S107. If the similarity is not less than or equal to the threshold, the process proceeds to Step S111.

In Step S107, the controller 18 determines that the partial region extracted in the most recent Step S101 is the location of the detection target 14. After the determination, the process proceeds to Step S108.

In Step S108, the controller 18 determines whether the similarity calculated in the most recent Step S105 is within a first range. If the similarity is within the first range, the process proceeds to Step S109. If the similarity is not within the first range, the process proceeds to Step S111.

In Step S109, the controller 18 stores the partial region extracted in the most recent Step S101 in the memory 17 as an unused image to be included in the training image group. After storing the partial region, the process proceeds to Step S110.

In Step S110, the controller 18 determines whether the number of unused images included in the training image group has reached a first number. If the number has reached the first number, the process proceeds to Step S200. If the number has not reached the first number, the process proceeds to Step S111.

In Step S200, the controller 18 updates the representative image ri as described below. After updating the representative image ri, the process proceeds to Step S111.

In Step S111, the controller 18 determines whether the entirety of the entire image wi has been extracted as a partial region. If the entirety has not been extracted, the process proceeds to Step S112. If the entirety has been extracted, the detection process ends.

In Step S112, the controller 18 displaces the partial region extracted in Step S101 while maintaining the same size. After the displacement, the process returns to Step S101.

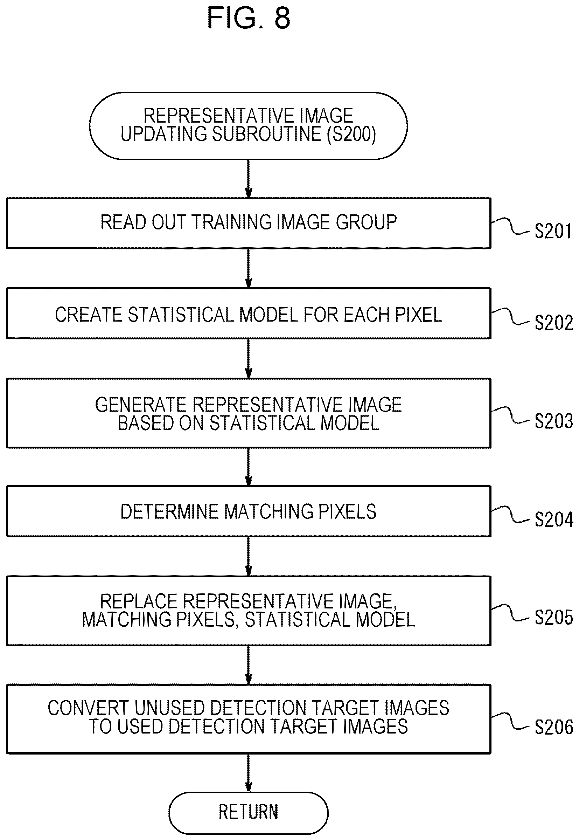

Next, a representative image updating subroutine S200 executed in Step S200 will be described with reference to the flowchart in FIG. 8.

In Step S201, the controller 18 reads out the training image group from the memory 17. After reading out the training image group, the process proceeds to Step S202.

In Step S202, the controller 18 creates a statistical model for each pixel based on the multiple detection target images included in the training image group read out in the most recent Step S201. After creating the statistical model, the process proceeds to Step S203.

In Step S203, the controller 18 generates a representative image ri based on the statistical model created in the most recent Step S202. After generating the representative image ri, the process proceeds to Step S204.

In Step S204, the controller 18 determines matching pixels in the representative image ri generated in the most recent Step S203. The controller 18 may use the training image group and the representative image ri to determine the matching pixels. After the determination, the process proceeds to Step S205.

In Step S205, the controller 18 replaces the statistical model created in the most recent Step 202, the representative image ri generated in the most recent Step S203, and the matching pixels determined in the most recent Step S204 with the statistical model, the representative image ri, and the matching pixels already stored in the memory 17. After the replacement, the process proceeds to Step S206.

In Step S206, the controller 18 converts the statuses of all detection target images included in Step S201 from unused to used. After the conversion, the representative image updating subroutine S200 ends, and the process returns to the location detection process.

The image processing device 10 of this embodiment configured as described above includes the communication unit (acquisition unit) 16 that acquires a first image wi. The image processing device 10 performs a similarity determination between a second image ri, which is generated based on a training image group including multiple detection target images different from the first image wi, and at least a portion of the first image wi. The image processing device 10 regenerates the second image based on a training image group including more unused images than the used images used to generate the second image ri. With this configuration, the image processing device 10 uses more detection target images that were acquired relatively recently when updating the second image ri, which is used to perform a similarity determination with a portion of the first image wi, and this allows the image processing device 10 to create a second image ri that better reflects the effects of disturbances. Therefore, the image processing device 10 can realize improved robustness in detecting the detection target 14, even when disturbances occur.

Furthermore, in the image processing device 10 of this embodiment, the training image group includes used images. With this configuration, the image processing device 10 can use detection target images captured under various circumstances to generate the second image ri. Therefore, the image processing device 10 can reduce the possibility of missing detection of the detection target image from the first image wi.

Furthermore, in the image processing device 10 of this embodiment, the training image group does not include used images. With this configuration, the image processing device 10 can reflect the influence of a recent disturbance in the second image ri. Therefore, the image processing device 10 can realize improved robustness in detecting the detection target 14 from the first image wi under conditions where a disturbance is occurring.

Furthermore, the image processing device 10 of this embodiment includes a portion of the first image wi as an unused image in the training image group when the similarity for similarity determination falls within a first range having a limit value on the matching side. If there are many detection target images with high similarity to the second image ri, there is an increased possibility of missing detection of an image where a disturbance has occurred with respect to the detection target images. In response to such an event, the image processing device 10 having the above-described configuration can reduce the possibility of missed detection by ensuring diversity in the detection target images used to update the second image ri.

Furthermore, when including unused images in the training image group, the image processing device 10 of this embodiment deletes from the training image group, in order of oldest to newest, images of the detection target 14 that were used in updating the immediately previous second image ri. With this configuration, the image processing device 10 can gradually reduce the influence of past disturbances on the second image ri, thereby reducing the possibility of missed detection, while gradually increasing the influence of recent disturbances on the second image ri. Therefore, the image processing device 10 can realize improved robustness in detecting the detection target 14 while reducing the possibility of missed detection.

Furthermore, the image processing device 10 of this embodiment regenerates the second image ri based on a training image group containing a different number of images than that when the second image ri was generated. Before starting actual image capturing, the effects of detection target images under various conditions need to be reflected in the second image ri, whereas after image capturing has started, the effects of variable disturbances that may occur need to be reflected in the second image ri. In response to such requirements, the image processing device 10 having the above-described configuration can appropriately address each aim before and after the start of image capturing, since the numbers of images of the detection target 14 included in the training image group are different.

Furthermore, the image processing device 10 of this embodiment uses a number of unused images when regenerating the second image ri that is different from the number of unused images used the previous time regeneration was performed. The time interval during which any type of disturbance occurs may vary depending on the type of disturbance. In response to such an event, the image processing device 10 having the above-described configuration can generate an appropriate representative image ri according to the length of the disturbance by changing the number of unused images used. As a result, the image processing device 10 can realize further improved robustness in detecting the detection target 14.

Furthermore, the image processing device 10 of this embodiment performs similarity determination by comparing the second image ri with the first image wi, and uses multiple characteristic pixels of the second image ri as comparison targets for the first image wi. A configuration in which all the pixels of the second image ri are compared with the corresponding portions imposes a high computational load and requires a relatively long time to perform detection. On the other hand, the image processing device 10 having the above-described configuration allows the computational load to be reduced while suppressing a decrease in detection accuracy by comparing characteristic pixels, thereby shortening the detection time.

Furthermore, the image processing device 10 of this embodiment performs similarity determination by comparing the second image ri with the first image wi, and uses multiple stable pixels in the second image ri as comparison targets. The multiple stable pixels are selected based on a similarity determination between the second image ri and at least one detection target image in the training image group. Characteristic pixels in the second image ri may be characteristic due to noise, etc. Using such pixels for comparison may reduce the accuracy of detection. In response to such events, the image processing device 10 having the above-described configuration can reduce the influence of noise and suppress a reduction in detection accuracy.

Furthermore, in the image processing device 10 of this embodiment, the number of detection target images used to select stable pixels is smaller than the number of detection target images used to generate or regenerate the second image ri. This number of detection target images is assumed to be the minimum number necessary to reflect the general situation trends in the second image ri. However, regarding the stability of pixel values, as the number of detection target images to be reflected increases, disturbances in the most recent detection target images may be regarded as noise, potentially causing pixels that are actually stable to be regarded as unstable. In response to such events, the image processing device 10 having the above-described configuration can appropriately generate the second image ri and determine stability.

Furthermore, in the image processing device 10 of this embodiment, the period for reselecting stable pixels is different from the period for regenerating the second image ri. When a disturbance occurs in a matching target and the disturbance is reflected in the second image ri, the pixels where the disturbance occurs are useful for calculating the similarity. The time at which a disturbance occurs varies and is different from the updating period of the second image ri. In response to such an event, the image processing device 10 having the above-described configuration can accommodate a reselection period for stability determination that is different from the period appropriate for regenerating the second image ri, by setting different periods for reselection and regeneration.

In addition, in the image processing device 10 of this embodiment, the period for reselecting stable pixels is the same as the period for regenerating the second image ri. With this configuration, the image processing device 10 can reduce the processing load by making both periods the same.

Furthermore, in the image processing device 10 of this embodiment, the proportion of unused images used to reselect stable pixels differs from the proportion of unused images used to regenerate the second image ri. The appropriate proportion of unused images for updating the second image ri may differ from the appropriate proportion of unused images for determining stability. In response to such an event, the image processing device 10 having the above-described configuration can reflect the general trend in the second image ri while more closely reflecting the influence of the most recent detection target image for stability determination.

Furthermore, in the image processing device 10 of this embodiment, the proportion of unused images used to reselect stable pixels is higher than the proportion of unused images used to regenerate the second image ri, and the amount of data in the training image group is small. With this configuration, the image processing device 10 can extract stable pixels taking into account disturbances and brightness changes that appear in the most recently acquired first image wi. Therefore, the image processing device 10 can select stable pixels for each lot even in situations where disturbances occur repeatedly over a short period of time, such as when there is variation between lots (when one lot has fewer pixels than the number required to regenerate the second image ri). As a result, the image processing device 10 can realize improved robustness.

In an embodiment, (1) an image processing device comprises:
an acquisition unit configured to acquire a first image; and
a first controller configured to perform a similarity determination between at least a portion of the first image and a second image generated based on a training image group including multiple detection target images different from the first image,
wherein the first controller
is capable of regenerating the second image, and
regenerates the second image based on a training image group that includes more unused images than used images used to generate the second image.

(2) The image processing device of (1) above,
   wherein the first controller is capable of regenerating the second image two or more times, and
   when regenerating the second image, the training image group includes multiple unused images not used in past regenerations of the second image, and a proportion of the unused images in the training image group is greater than a proportion of used images used in past regenerations of the second image in the training image group.
(3) The image processing device of (1) or (2) above,
   wherein the training image group is selected each time from multiple detection target images stored in a memory when the second image is generated or regenerated.
(4) The image processing device of any one of (1) to (3) above,
   wherein the training image group includes the used images.
(5) The image processing device of any one of (1) to (3) above,
   wherein the training image group does not include the used images.
(6) The image processing device of any one of (1) to (5) above,
   wherein when the first controller determines that at least a portion of the first image is similar to the second image, the first controller acquires the portion as an unused image among the unused images of the detection target images.
(7) The image processing device of any one of (1) to (6),
   wherein the first controller regenerates the second image when the number of the multiple unused images reaches a first number.
(8) The image processing device of any one of (1) to (7),
   wherein the first controller regenerates the second image based on the training image group with the training image group containing a different number of images from when the second image is generated.
(9) The image processing device of any one of (1) to (8),
   wherein when regenerating the second image, the first controller uses a different number of the multiple unused images from the number of the multiple unused images used in a previous regeneration.
(10) The image processing device of any one of (1) to (9) above,
   wherein the first controller performs the similarity determination by comparing the second image with the first image, and uses multiple stable pixels in the second image as comparison targets, and
   the multiple stable pixels are selected based on a similarity determination between the second image and at least one detection target image in the training image group.
(11) The image processing device of (10) above,
   wherein the number of the multiple detection target images used to select the stable pixels is less than the number of the detection target images used to generate or regenerate the second image.
(12) The image processing device of (10) or (11) above,
   wherein the stable pixels
   can be reselected and
   the stable pixels are selected based on at least one unused image not used in past selections or reselections of the stable pixels.
(13) The image processing device of any one of (10) to (12) above,
   wherein a proportion of the unused images used in reselection of the stable pixels is different from a proportion of the unused images used in regeneration of the second image.

In an embodiment, (14) an image processing method comprises:
acquiring a first image;
performing a similarity determination between at least a portion of the first image and a second image generated based on a training image group including multiple detection target images different from the first image, and
regenerating the second image based on a training image group including more unused images than used images used to generate the second image.

In an embodiment, (15) a manipulation device controller comprises:
a controller configured to acquire the similarity determination in the image processing device of any one of (1) to (13) and configured to be capable of controlling a manipulation device based on the similarity determination.

An embodiment of the image processing device 10 has been described above, but embodiments of the present disclosure can also be realized as a method or program for implementing the device, as well as a storage medium on which a program is recorded (for example, an optical disk, a magneto-optical disk, a CD-ROM, a CD-R, a CD-RW, a magnetic tape, a hard disk, or a memory card, etc.).

Furthermore, the embodiment of a program is not limited to an application program such as object code compiled by a compiler or program code executed by an interpreter, and can also take the form of a program module or the like incorporated into an operating system. Furthermore, the program may or not be configured so that all processing is performed only in a CPU on a control board. The program may be configured to be implemented entirely or partially by another processing unit mounted on an expansion board or expansion unit added to the board as necessary.

The drawings illustrating the embodiments of the present disclosure are schematic drawings. The dimensional proportions and so on in the drawings do not necessarily match the actual dimensional proportions and so on.

Although embodiments of the present disclosure have been described based on the drawings and examples, please note that one skilled in the art can make various modifications or changes based on the present disclosure. Therefore, please note that these modifications or changes are included within the scope of the present disclosure. For example, the functions and so on included in each constituent part can be rearranged in a logically consistent manner, and multiple constituent parts and so on can be combined into a single part or divided into multiple parts.

For example, in this embodiment, the training image set includes a greater number of unused images than the number of used images, but is not limited to such a configuration. The number of used images included in the training image group may be the same as or greater than the number of unused images.

All of the constituent elements described in the present disclosure and/or all of the disclosed methods or all of the steps of disclosed processing can be combined in any combination, except for combinations in which their features would be mutually exclusive. Furthermore, each of the features described in the present disclosure may be replaced by alternative features that serve the same, equivalent, or similar purposes, unless explicitly stated to the contrary. Therefore, unless explicitly stated to the contrary, each of the disclosed features is only one example of a comprehensive set of identical or equivalent features.

Furthermore, the embodiments according to the present disclosure are not limited to any of the specific configurations of the embodiments described above. The embodiments according to the present disclosure can be extended to all novel features, or combinations thereof, described in the present disclosure, or all novel methods, or processing steps, or combinations thereof, described in the present disclosure.

In the present disclosure, "first" and so on are identifiers used to distinguish between such configurations.

### REFERENCE SIGNS

- 10: image processing device
- 11: object manipulation system
- 12: camera
- 13: manipulation device
- 14: detection target
- 15: tray
- 16: communication unit
- 17: memory
- 18: controller
- 19: input unit
- 20: manipulation device controller
- 21: controller
- ri: representative image
- wi: entire image

## Claims

1. An image processing device comprising:
an acquisition unit configured to acquire a first image; and
a first controller configured to perform a similarity determination between at least a portion of the first image and a second image generated based on a training image group including multiple detection target images different from the first image,
wherein the first controller
is capable of regenerating the second image, and
regenerates the second image based on a training image group that includes more unused images than used images used to generate the second image.

2. The image processing device according to claim 1,
wherein the first controller is capable of regenerating the second image two or more times, and
when regenerating the second image, the training image group includes multiple unused images not used in past regenerations of the second image, and a proportion of the multiple unused images in the training image group is greater than a proportion of used images used in past regenerations of the second image in the training image group.

3. The image processing device according to claim 1 or 2,
wherein the training image group is selected each time from multiple detection target images stored in a memory when the second image is generated or regenerated.

4. The image processing device according to any one of claims 1 to 3,
wherein the training image group includes the used images.

5. The image processing device according to any one of claims 1 to 3,
wherein the training image group does not include the used images.

6. The image processing device according to any one of claims 1 to 5,
wherein when the first controller determines that at least a portion of the first image is similar to the second image, the first controller acquires the portion as an unused image among the unused images of the detection target images.

7. The image processing device according to any one of claims 1 to 6,
wherein the first controller regenerates the second image when the number of the multiple unused images reaches a first number.

8. The image processing device according to any one of claims 1 to 7,
wherein the first controller regenerates the second image based on the training image group with the training image group containing a different number of images from when the second image is generated.

9. The image processing device according to any one of claims 1 to 8,
wherein when regenerating the second image, the first controller uses a different number of the multiple unused images from the number of the multiple unused images used in a previous regeneration.

10. The image processing device according to any one of claims 1 to 9,
wherein the first controller performs the similarity determination by comparing the second image with the first image, and uses multiple stable pixels in the second image as comparison targets, and
the multiple stable pixels are selected based on a similarity determination between the second image and at least one detection target image in the training image group.

11. The image processing device according to claim 10,
wherein the number of the multiple detection target images used to select the stable pixels is less than the number of the detection target images used to generate or regenerate the second image.

12. The image processing device according to claim 10 or 11,
wherein the stable pixels
can be reselected and
the stable pixels are selected based on at least one unused image not used in past selections or reselections of the stable pixels.

13. The image processing device according to any one of claims 10 to 12,
wherein a proportion of the unused images used in reselection of the stable pixels is different from a proportion of the unused images used in regeneration of the second image.

14. An image processing method comprising: acquiring a first image;
performing a similarity determination between at least a portion of the first image and a second image generated based on a training image group including multiple detection target images different from the first image, and
regenerating the second image based on a training image group that includes more unused images than used images used to generate the second image.

15. A manipulation device controller comprising:
a second controller configured to acquire the similarity determination in the image processing device according to any one of claims 1 to 13 and configured to be capable of controlling a manipulation device based on the similarity determination.
